# EUROPEAN PATENT APPLICATION

(11) **EP 4 109 910 A1**
(43) Date of publication of application: **28.12.2022**
(21) Application number: 20919536.1
(22) Date of filing: 19.06.2020
(51) Int. Cl.: H04N 21/41, H04N 21/422, H04N 21/4363

(54) **DEVICE WAKING-UP METHOD AND APPARATUS, AND ELECTRONIC DEVICE**

(30) Priority: 18.02.2020 CN 202010098946
(71) Applicant: Spreadtrum Communications (Shanghai) Co., Ltd., Shanghai 201203 (CN)
(72) Inventor: ZHAO, Chen, Shanghai 201203 (CN); TANG, Yulian, Shanghai 201203 (CN)
(74) Representative: Gill Jennings & Every LLP
(86) International application number: PCT/CN2020/097146
(87) International publication number: WO 2021/164159

(57) **Abstract**

Embodiments of the present invention provide a device waking-up method and apparatus, and an electronic device. The device waking-up method includes: a Bluetooth module receives data to be processed sent by a first Bluetooth peripheral when a protocol stack module is in a dormant state, where the Bluetooth module stores information, sent by the protocol stack module before entering the dormant state, of a second Bluetooth peripheral which successfully performs Bluetooth pairing with the Bluetooth module; and the Bluetooth module wakes up a device according to the data to be processed and the information of the second Bluetooth peripheral. The information of the second Bluetooth peripheral is sent to the Bluetooth module by the protocol stack module before entering the dormant state, and the first Bluetooth peripheral does not need to be customized in advance, thereby reducing cost of waking up a device, and improving universality of a Bluetooth peripheral.

## Description

This application claims priority to Chinese Patent Application No. 202010098946.1, filed to the China National Intellectual Property Administration on February 18, 2020 and entitled "Device Waking-up Method and Apparatus, and Electronic Device", which is hereby incorporated by reference in its entirety.

### TECHNICAL FIELD

The present invention relates to the field of communication technologies, and in particular, to a device waking-up method and apparatus, and an electronic device.

### BACKGROUND

With the development of the Internet of Things, people have higher and higher requirements for low power consumption of various devices. For example, a television box needs to stand by or be in dormancy when not in use. When changing from a standby or dormant state to a working state, the television box needs to be woken up first.

There are many ways to wake up the device, one of which is through a Bluetooth peripheral. Generally, a system structure of a Bluetooth-enabled device includes a device master control module and a Bluetooth module. The Bluetooth module can communicate with the Bluetooth peripheral. When the device master control module is in a dormant state, the Bluetooth module does not have an ability to analyze an upper layer service data sent by the Bluetooth peripheral.

Currently, when waking up a device is implemented through a Bluetooth peripheral, the Bluetooth peripheral is usually customized. The customized Bluetooth peripheral sends special data, and correspondingly, information of the customized Bluetooth peripheral is hard-coded in the Bluetooth module. When receiving the special data, the Bluetooth module can recognize the customized Bluetooth peripheral and wake up the device. This leads to high cost and poor universality of waking up the device.

### SUMMARY

Embodiments of the present invention provide a device waking-up method and apparatus, and an electronic device, which reduce cost of waking up a device and improve universality of a Bluetooth peripheral.

In a first aspect, an embodiment of the present invention provides a device waking-up method, applied to a device waking-up apparatus, where the device waking-up apparatus includes a Bluetooth module and a protocol stack module, and the method includes:
receiving, by the Bluetooth module, data to be processed sent by a first Bluetooth peripheral, when the protocol stack module is in a dormant state; where, the Bluetooth module stores information, sent by the protocol stack module before entering the dormant state, of a second Bluetooth peripheral which successfully performs Bluetooth pairing with the Bluetooth module; and
waking up, by the Bluetooth module, the device, according to the data to be processed and the information of the second Bluetooth peripheral.

Optionally, the data to be processed includes an address of the first Bluetooth peripheral, and the information of the second Bluetooth peripheral includes an address of the second Bluetooth peripheral; and
the waking up, by the Bluetooth module, the device, according to the data to be processed and the information of the second Bluetooth peripheral includes:
waking up, by the Bluetooth module, the device, if determining that the address of the first Bluetooth peripheral is the same as the address of the second Bluetooth peripheral.

Optionally, the data to be processed further includes a target key descriptor, and the information of the second Bluetooth peripheral further includes a preset key and mapping information between a key of the second Bluetooth peripheral and a key descriptor, and the preset key is used to wake up the device;
before waking up, by the Bluetooth module, the device, the method further includes:
   determining, by the Bluetooth module, whether the first Bluetooth peripheral supports a Bluetooth HID protocol;
   determining, by the Bluetooth module, a target key according to the target key descriptor and the mapping information, if determining that the first Bluetooth peripheral supports the Bluetooth HID protocol; and
the waking up, by the Bluetooth module, the device includes:
   waking up, by the Bluetooth module, the device, if determining that the target key is the preset key.

Optionally, the first Bluetooth peripheral is a Bluetooth peripheral that keeps a Bluetooth connection with the Bluetooth module.

Optionally, a Bluetooth connection is not performed between the first Bluetooth peripheral and the Bluetooth module, and the data to be processed is broadcast by the first Bluetooth peripheral.

Optionally, before the protocol stack module enters the dormant state, the method further includes:
obtaining, by the protocol stack module, the information of the second Bluetooth peripheral sent by the second Bluetooth peripheral through the Bluetooth module, after the Bluetooth module successfully performs the Bluetooth pairing with the second Bluetooth peripheral; and
sending, by the protocol stack module, the information of the second Bluetooth peripheral to the Bluetooth module.

Optionally, before obtaining, by the protocol stack module, the information of the second Bluetooth peripheral sent by the second Bluetooth peripheral through the Bluetooth module, the method further includes:
determining, by the protocol stack module, whether the second Bluetooth peripheral supports a Bluetooth HID protocol; and
the obtaining, by the protocol stack module, the information of the second Bluetooth peripheral sent by the second Bluetooth peripheral through the Bluetooth module includes:
   obtaining, by the protocol stack module, the information of the second Bluetooth peripheral sent by the second Bluetooth peripheral through the Bluetooth module, if determining that the second Bluetooth peripheral supports the Bluetooth HID protocol.

In a second aspect, an embodiment of the present invention provides a device waking-up apparatus, which includes: a Bluetooth module and a protocol stack module;
where the Bluetooth module is configured to receive data to be processed sent by a first Bluetooth peripheral when the protocol stack module is in a dormant state; where, the Bluetooth module stores information, sent by the protocol stack module before entering the dormant state, of a second Bluetooth peripheral which successfully performs Bluetooth pairing with the Bluetooth module; and
the Bluetooth module is further configured to wake up a device according to the data to be processed and the information of the second Bluetooth peripheral.

Optionally, the data to be processed includes an address of the first Bluetooth peripheral, and the information of the second Bluetooth peripheral includes an address of the second Bluetooth peripheral; and
the Bluetooth module is specifically configured to:
wake up the device if determining that the address of the first Bluetooth peripheral is the same as the address of the second Bluetooth peripheral.

Optionally, the data to be processed further includes a target key descriptor, and the information of the second Bluetooth peripheral further includes a preset key and mapping information between a key of the second Bluetooth peripheral and a key descriptor, and the preset key is used to wake up the device;
the Bluetooth module is further configured to:
   determine whether the first Bluetooth peripheral supports a Bluetooth HID protocol before waking up the device;
   determine a target key according to the target key descriptor and the mapping information if determining that the first Bluetooth peripheral supports the Bluetooth HID protocol; and
the Bluetooth module is specifically configured to:
   wake up the device, if determining that the target key is the preset key.

Optionally, the first Bluetooth peripheral is a Bluetooth peripheral that keeps a Bluetooth connection with the Bluetooth module.

Optionally, a Bluetooth connection is not performed between the first Bluetooth peripheral and the Bluetooth module, and the data to be processed is broadcast by the first Bluetooth peripheral.

Optionally, the protocol stack module is further configured to:
obtain the information of the second Bluetooth peripheral sent by the second Bluetooth peripheral through the Bluetooth module, before the protocol stack module enters a dormant state, and after the Bluetooth module successfully performs the Bluetooth pairing with the second Bluetooth peripheral; and
send the information of the second Bluetooth peripheral to the Bluetooth module.

Optionally, the protocol stack module is further configured to:
determine whether the second Bluetooth peripheral supports a Bluetooth HID protocol before obtaining the information of the second Bluetooth peripheral sent by the second Bluetooth peripheral through the Bluetooth module;
the protocol stack module is specifically configured to:
   obtain the information of the second Bluetooth peripheral sent by the second Bluetooth peripheral through the Bluetooth module, if determining that the second Bluetooth peripheral supports the Bluetooth HID protocol.

In a third aspect, an embodiment of the present invention provides an electronic device which includes a processor, a memory and a transceiver;
where the transceiver is configured to communicate with other devices;
the memory is configured to store instructions; and
the processor is configured to execute the instructions stored in the memory to perform the method provided by any implementation of the first aspect of the present invention.

In a fourth aspect, an embodiment of the present invention provides a computer-readable storage medium which includes a readable storage medium and a computer program, and the computer program is used to implement the method provided by any implementation of the first aspect of the present invention.

In a fifth aspect, an embodiment of the present invention provides a program product, which includes a computer program (i.e., executing instructions) stored in a readable storage medium. At least one processor can read the computer program from the readable storage medium, and the at least one processor executes the computer program to cause the device to implement the method provided by any implementation of the first aspect of the present invention.

The embodiments of the present invention provide the device waking-up method and apparatus, and the electronic device. When the protocol stack module is in the dormant state, the Bluetooth module receives data to be processed sent by the first Bluetooth peripheral, where the Bluetooth module stores information, sent by the protocol stack module before entering the dormant state, of the second Bluetooth peripheral which successfully performs Bluetooth pairing with the Bluetooth module, and the Bluetooth module wakes up the device according to the data to be processed and the information of the second Bluetooth peripheral. Before the protocol stack module enters the dormant state, the protocol stack module sends the information of the second Bluetooth peripheral to the Bluetooth module, so that the Bluetooth module can identify the Bluetooth peripheral that wakes up the device, and the first Bluetooth peripheral does not need to be customized in advance, thereby reducing cost of waking up the device and improving universality of the Bluetooth peripheral to wake up the device.

### BRIEF DESCRIPTION OF DRAWINGS

In order to more clearly explain the embodiments of the present invention or the technical solutions in the prior art, the following will briefly introduce the drawings that need to be used in the description of the embodiments or the prior art. Obviously, the drawings in the following description are some embodiments of the present invention. For those of ordinary skill in the art, other drawings can be obtained according to these drawings on the premise of no creative effort.
FIG. 1 is a schematic diagram of an existing principle of waking up a device through a Bluetooth peripheral;
FIG. 2 is a schematic diagram of a principle of waking up a device through a Bluetooth peripheral applicable to an embodiment of the present invention;
FIG. 3 is an application scenario diagram applicable to an embodiment of the present invention;
FIG. 4 is a flowchart of a device waking-up method provided by an embodiment of the present invention;
FIG. 5 is another flowchart of a device waking-up method provided by an embodiment of the present invention;
FIG. 6 is yet another flowchart of a device waking-up method provided by an embodiment of the present invention;
FIG. 7 is a schematic structural diagram of a device waking-up apparatus provided by an embodiment of the present invention; and
FIG. 8 is a structural diagram of an electronic device provided by an embodiment of the present invention.

### DESCRIPTION OF EMBODIMENTS

In order to make a purpose, a technical scheme and advantages of embodiments of the present invention clearer, the technical scheme in the embodiments of the present invention will be clearly and completely described below with reference to the drawings in the embodiments of the present invention. Obviously, the described embodiments are a part of the embodiments of the present invention, but not the all embodiments. Based on the embodiments of the present invention, all other embodiments obtained by those of ordinary skill in the art without creative effort are within the protection scope of the present invention.

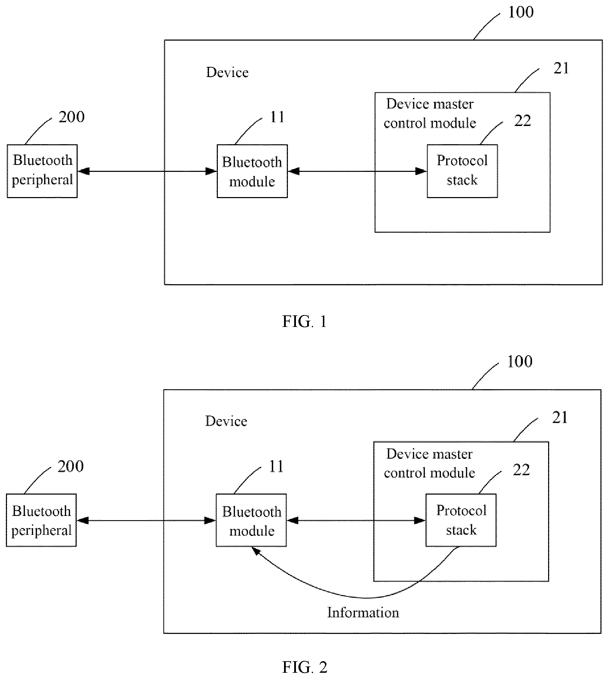

In the prior art, a device in a dormant state or a standby state is usually woken up by a customized Bluetooth peripheral. The following description will be made with reference to FIG. 1. Exemplarily, FIG. 1 is a schematic diagram of an existing principle of waking up a device through a Bluetooth peripheral. As shown in FIG. 1, a device 100 may include a Bluetooth module 11 and a device master control module. The Bluetooth module 11 can communicate with a Bluetooth peripheral 200. The device master control module 21 runs a protocol stack 22, and the protocol stack 22 supports the Bluetooth protocol. Hardware forms of the device master control module 21 and the Bluetooth module 11 are not limited in the present invention. For example, the device master control module 21 may be a chip. When the device master control module 21 is in a working state, the Bluetooth module 11 can receive upper layer service data sent by the Bluetooth peripheral 200, and send the upper layer service data to the device master control module 21 for analysis. In order to meet the low power consumption requirement of the device, the device master control module 21 can enter a dormant state or a standby state. At this time, the Bluetooth module 11 does not have the ability to analyze the upper layer service data sent by the Bluetooth peripheral 200. Therefore, by customizing a specific Bluetooth peripheral 200, a part of the information related to the customized Bluetooth peripheral 200 is hard-coded in the Bluetooth module 11. When the device master control module 21 is in a dormant state or a standby state, the Bluetooth module 11 can analyze the upper layer service data sent by the Bluetooth peripheral 200 through the hard-coded part of the information of the Bluetooth peripheral 200. When it is analyzed that the upper layer service data includes preset data for waking up the device, the device master control module 21 can be woken up to wake up the device. However, customizing the Bluetooth peripheral not only increases the cost of waking up the device, but also makes the Bluetooth peripheral fixed, resulting in poor universality.

Based on this technical problem, an embodiment of the present invention provides a device waking-up method. Exemplarily, referring to FIG. 2, FIG. 2 is a schematic diagram of a principle of waking up a device through a Bluetooth peripheral applicable to an embodiment of the present invention. As shown in FIG. 2, before the device master control module 21 enters the dormant state, the device master control module 21 sends information to the Bluetooth module 11, which is used for the Bluetooth module 11 to analyze the upper layer service data sent by the Bluetooth peripheral 200, so that the Bluetooth module 11 has the ability to analyze the upper layer service data sent by the Bluetooth peripheral 200, thereby waking up the device. According to the device waking-up method provided by the embodiment of the present invention, the Bluetooth peripheral does not need to be customized in advance, so that the cost of waking up the device is reduced and the universality of the Bluetooth peripheral to wake up the device is improved.

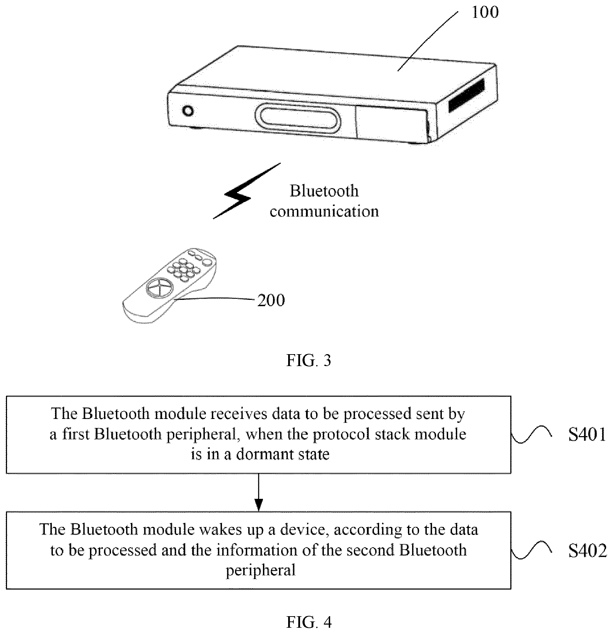

It should be noted that the embodiments of the present invention does not limit a product form, a type, a structure, etc. of the device 100 and the Bluetooth peripheral 200 in FIG. 1 and FIG. 2. The device can be any device that can be woken up by Bluetooth, such as a TV box, a TV, an air conditioner, a computer, a projector, etc. The Bluetooth peripheral 200 can be any apparatus that supports the Bluetooth function and can wake up the device, for example, a remote controller, a smart phone, a wearable device (such as a smart watch and a smart bracelet), etc. Exemplarily, FIG. 3 is an application scenario diagram to which the embodiments of the present invention are applicable. In FIG. 3, the device 100 may be a television box, and the Bluetooth peripheral 200 may be a remote controller. For example, the up key on the remote controller can be used to wake up the television box.

The following description is made with reference to the drawings. Without conflict, the following embodiments and features in the embodiments can be combined with each other.

FIG. 4 is a flowchart of a device waking-up method provided by an embodiment of the present invention. The device waking-up method provided in this embodiment can be applied to a device waking-up apparatus, which includes a Bluetooth module and a protocol stack module. As shown in FIG. 4, the device waking-up method provided in this embodiment may include the following.

S401, the Bluetooth module receives data to be processed sent by a first Bluetooth peripheral, when the protocol stack module is in a dormant state.

The Bluetooth module stores information, sent by the protocol stack module before entering the dormant state, of a second Bluetooth peripheral which successfully performs Bluetooth pairing with the Bluetooth module.

Specifically, the protocol stack module can run a Bluetooth protocol stack, and the Bluetooth module can communicate with the Bluetooth peripheral and transmit data. Before entering the dormant state, the protocol stack module sends the information of the second Bluetooth peripheral to the Bluetooth module, and correspondingly, the Bluetooth module receives and stores the information of the second Bluetooth peripheral. In this way, when the protocol stack module is in the dormant state and the Bluetooth module receives the data to be processed sent by the first Bluetooth peripheral, the Bluetooth module has the ability to identify the first Bluetooth module and analyze the data to be processed with the information of the second Bluetooth peripheral, and further determines whether to wake up the device according to the identification result and the data analysis result.

In this embodiment, the number and the type of the second Bluetooth peripheral are not limited.

In this embodiment, for the convenience of distinction, the Bluetooth peripheral which successfully performs the Bluetooth pairing with the Bluetooth module is called the second Bluetooth peripheral. The second Bluetooth peripheral can wake up the device. When the protocol stack module is in the dormant state, the Bluetooth peripheral that communicates with the Bluetooth module is called the first Bluetooth peripheral. The second Bluetooth peripheral must have been in the Bluetooth connection with the Bluetooth module, but in this embodiment, whether the second Bluetooth peripheral keeps Bluetooth connection with the Bluetooth module when the protocol stack module is in the dormant state is not limited. When the protocol stack module is in the dormant state, the Bluetooth module can receive the data to be processed sent by the first Bluetooth peripheral. However, in this embodiment, whether the first Bluetooth peripheral keeps Bluetooth connection with the Bluetooth module is not limited. The first Bluetooth peripheral and the second Bluetooth peripheral can be the same Bluetooth peripheral or different Bluetooth peripherals.

Optionally, the first Bluetooth peripheral keeps Bluetooth connection with the Bluetooth module.

Optionally, the first Bluetooth peripheral hasn't performed the Bluetooth connection with the Bluetooth module, and the data to be processed is broadcast by the first Bluetooth peripheral.

Below, the application scenarios to which the embodiments of the present invention are applicable will be explained by examples, but this does not constitute a limitation on the application scenarios. Suppose there are four Bluetooth peripherals, which are called a Bluetooth Peripheral 1 to a Bluetooth Peripheral 4, respectively.

In a first application scenario, the Bluetooth peripheral 1 performs a Bluetooth pairing and a Bluetooth connection with the Bluetooth module, and then the Bluetooth connection is disconnected. After the protocol stack module enters the dormant state, the Bluetooth peripheral 1 performs the Bluetooth connection with the Bluetooth module again, and sends the data to be processed to the Bluetooth module. At this time, the second Bluetooth peripheral is the Bluetooth peripheral 1, and the first Bluetooth peripheral is the Bluetooth peripheral 1.

In a second application scenario, the Bluetooth peripheral 1 performs a Bluetooth pairing and a Bluetooth connection with the Bluetooth module, and then the Bluetooth connection is disconnected. After the protocol stack module enters the dormant state, the Bluetooth peripheral 1 broadcasts data, and the Bluetooth module receives the data broadcast by the Bluetooth peripheral 1. At this time, the second Bluetooth peripheral is the Bluetooth peripheral 1, and the first Bluetooth peripheral is the Bluetooth peripheral 1.

In a third application scenario, the Bluetooth peripheral 1 performs a Bluetooth pairing and a Bluetooth connection with the Bluetooth module, and keeps the Bluetooth connection. After the protocol stack module enters the dormant state, the Bluetooth peripheral 1 sends the data to be processed to the Bluetooth module. At this time, the second Bluetooth peripheral is the Bluetooth peripheral 1, and the first Bluetooth peripheral is the Bluetooth peripheral 1.

In a fourth application scenario, the Bluetooth peripherals 1 to 3 perform Bluetooth pairings and Bluetooth connections with the Bluetooth module, and keep the Bluetooth connections. After the protocol stack module enters the dormant state, the Bluetooth peripheral 2 sends the data to be processed to the Bluetooth module. At this time, the second Bluetooth peripheral is the Bluetooth peripherals 1 to 3 and the first Bluetooth peripheral is the Bluetooth peripheral 2.

In a fifth application scenario, the Bluetooth peripherals 1 to 3 perform Bluetooth pairings and Bluetooth connections with the Bluetooth module, then the Bluetooth peripheral 1 disconnects the Bluetooth connection and the Bluetooth peripherals 2 to 3 keep the Bluetooth connections. After the protocol stack module enters the dormant state, the Bluetooth peripheral 4 performs a Bluetooth connection with the Bluetooth module and sends the data to be processed to the Bluetooth module. At this time, the second Bluetooth peripheral is the Bluetooth peripherals 1 to 3, and the first Bluetooth peripheral is the Bluetooth peripheral 4.

In a sixth application scenario, the Bluetooth peripherals 1 to 3 perform Bluetooth pairings and Bluetooth connections with the Bluetooth module, and then the Bluetooth peripheral 1 disconnects the Bluetooth connection and the Bluetooth peripherals 2 to 3 keep the Bluetooth connection. After the protocol stack module enters the dormant state, the Bluetooth peripheral 1 broadcasts data, and the Bluetooth module receives the data broadcast by the Bluetooth peripheral 1. At this time, the second Bluetooth peripheral is the Bluetooth peripherals 1 to 3, and the first Bluetooth peripheral is the Bluetooth peripheral 1.

S402, the Bluetooth module wakes up the device according to the data to be processed and the information of the second Bluetooth peripheral.

It can be seen that in the device waking-up method provided in this embodiment, before the protocol stack module enters the dormant state, the protocol stack module sends the information of the second Bluetooth peripheral which has successfully performed the Bluetooth pairing to the Bluetooth module, and the information of the second Bluetooth peripheral is used for the Bluetooth module to identify the Bluetooth peripheral and analyze the data sent by the Bluetooth peripheral, so that the Bluetooth module has the ability to analyze the upper layer service data sent by the Bluetooth peripheral, so that the Bluetooth module can determine whether to wake up the device according to the data to be processed and the information of the second Bluetooth peripheral. According to the device waking-up method provided by this embodiment, the first Bluetooth peripheral does not need to be customized in advance, and any Bluetooth peripheral can wake up the device, which reduces the cost of waking up the device and improves the universality of the Bluetooth peripheral to wake up the device.

It should be noted that in this embodiment, the specific contents of the data to be processed and the information of the second Bluetooth peripheral are not limited. The information of the second Bluetooth peripheral may include at least one of the following: an identification of the second Bluetooth peripheral, an address of the second Bluetooth peripheral, preset information of the second Bluetooth peripheral to wake up the device, and necessary information for analyzing the upper layer service data. If the first Bluetooth peripheral is a Bluetooth peripheral that can wake up the device, the data to be processed may include information for waking up the device, for example, at least one of the following: an identification of the first Bluetooth peripheral, an address of the first Bluetooth peripheral, and preset information for waking up the device.

Optionally, the data to be processed may include the address of the first Bluetooth peripheral, and the information of the second Bluetooth peripheral may include the address of the second Bluetooth peripheral.

In S402, the Bluetooth module wakes up the device according to the data to be processed and the information of the second Bluetooth peripheral may include:
the Bluetooth module wakes up the device, if determining that the address of the first Bluetooth peripheral is the same as the address of the second Bluetooth peripheral.

Specifically, if the Bluetooth module determines that the address of the first Bluetooth peripheral is the same as the address of the second Bluetooth peripheral, it means that the first Bluetooth peripheral and the second Bluetooth peripheral are the same device, and the first Bluetooth peripheral can wake up the device.

It can be seen that in this implementation, the Bluetooth module can identify that whether the first Bluetooth peripheral is the second Bluetooth peripheral by comparing the address of the first Bluetooth peripheral with the address of the second Bluetooth peripheral sent by the protocol stack module before entering the dormant state. When it is determined that the first Bluetooth peripheral and the second Bluetooth peripheral are the same device, the device can be woken up. The application scenario of this implementation can be as follows: the first Bluetooth peripheral currently keeps Bluetooth connection with the Bluetooth module, and the first Bluetooth peripheral sends the data to be processed to the Bluetooth module; or, the first Bluetooth peripheral hasn't performed Bluetooth connection with the Bluetooth module, and the first Bluetooth peripheral broadcasts data, and the Bluetooth module receives the data broadcast by the first Bluetooth peripheral. Exemplarily, it can be applied to any one of the first application scenario to the sixth application scenario.

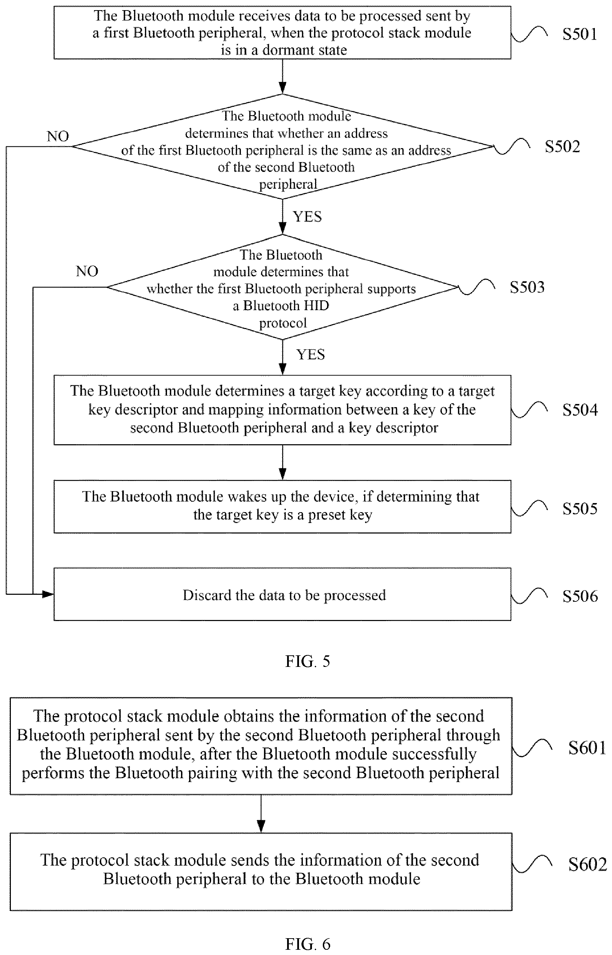

On the basis of the embodiment shown in FIG. 4, FIG. 5 is another flowchart of a device waking-up method provided by an embodiment of the present invention. The device waking-up method provided in this embodiment is applicable for the application scenario where the first Bluetooth peripheral keeps Bluetooth connection with the Bluetooth module. Where the data to be processed includes the address of the first Bluetooth peripheral and the target key descriptor, and the information of the second Bluetooth peripheral can include an address of the second Bluetooth peripheral, a preset key, and mapping information between keys of the second Bluetooth peripheral and key descriptors, and the preset key is used to wake up the device.

As shown in FIG. 5, the device waking-up method provided in this embodiment may include the following.

S501, the Bluetooth module receives data to be processed sent by a first Bluetooth peripheral, when the protocol stack module is in a dormant state.

Refer to the description in S401, the principles are similar, which will not be repeated here.

S502, the Bluetooth module determines that whether an address of the first Bluetooth peripheral is the same as an address of the second Bluetooth peripheral.

If the address of the first Bluetooth peripheral is the same as the address of the second Bluetooth peripheral, S503 is executed.

If the address of the first Bluetooth peripheral is different from the address of the second Bluetooth peripheral, S506 is executed.

S503, the Bluetooth module determines that whether the first Bluetooth peripheral supports a Bluetooth HID protocol.

If the Bluetooth module determines that the first Bluetooth peripheral supports the Bluetooth HID protocol, S504 is executed.

If the Bluetooth module determines that the first Bluetooth peripheral does not support the Bluetooth HID protocol, S506 is executed.

The Bluetooth human interface device (Human Interface Device, HID) protocol is based on a universal serial bus (Universal Serial Bus, USB) HID protocol, and is used for a slave device (slaver) to control a master device (host). In various embodiments of the present invention, the slaver is a Bluetooth peripheral, and the host is a device to be woken up. The Bluetooth HID protocol specifies that there is a mapping relationship (reportmap) between keys of the Bluetooth peripheral and key descriptors. In this embodiment, through the mapping relationship between the keys of the Bluetooth peripheral and the key descriptors, a preset key used to wake up the device can be customized, which improves the flexibility of waking up the device.

S504, the Bluetooth module determines a target key according to a target key descriptor and mapping information between a key of the second Bluetooth peripheral and a key descriptor.

Give examples to illustrate. As shown in FIG.3, both the remote controller and the television box support the Bluetooth HID protocol. When a key on the remote controller is pressed, the data to be processed sent by the remote controller to the television box includes a target key descriptor corresponding to the key. The mapping information between the keys of the remote controller and the key descriptors can include: an up key corresponds to a signal 1, a down key corresponds to a signal 2, a left key corresponds to a signal 3 and a right key corresponds to a signal 4. Accordingly, the television box can analyze the target key descriptor sent by the remote controller according to the mapping information between the keys of the remote controller and the key descriptors, so as to determine the pressed key on the remote controller. For example, if the target key descriptor is the signal 4, it corresponds to the right key.

S505, the Bluetooth module wakes up the device, if determining that the target key is a preset key.

It should be noted that the preset key is not limited in this embodiment. For example, in FIG. 3, the preset key can be an up key, a down key, a left key or a right key in the remote controller.

S506, discard the data to be processed.

It can be seen that the device waking-up method provided in this embodiment is applied to the scenario where both the Bluetooth peripheral and the device to be woken up support the Bluetooth HID protocol. The first Bluetooth peripheral keeps Bluetooth connection with the Bluetooth module, and the Bluetooth module first determines whether the first Bluetooth peripheral and the second Bluetooth peripheral are the same device through the address of the first Bluetooth peripheral and the address of the second Bluetooth peripheral, and if it is determined to be the same device, further determines whether the first Bluetooth peripheral is a Bluetooth HID device; and if the first Bluetooth peripheral is the Bluetooth HID device, compares the target key corresponding to the target key descriptor sent by the first Bluetooth peripheral with the preset key that can wake up the device, so as to determine whether to wake up the device.

According to the device waking-up method provided by this embodiment, the first Bluetooth peripheral does not need to be customized in advance, and the device can be woken up by the predefined preset key, so that the cost of waking up the device is reduced, and the universality of the Bluetooth peripheral to wake up the device is improved.

On the basis of the embodiments shown in FIG. 4 or FIG. 5, FIG. 6 is yet another flowchart of a device waking-up method provided by an embodiment of the present invention. The device waking-up method provided in this embodiment, before the protocol stack module enters the dormant state, may further include the following.

S601, the protocol stack module obtains the information of the second Bluetooth peripheral sent by the second Bluetooth peripheral through the Bluetooth module, after the Bluetooth module successfully performs the Bluetooth pairing with the second Bluetooth peripheral.

S602, the protocol stack module sends the information of the second Bluetooth peripheral to the Bluetooth module.

Specifically, after the Bluetooth module and the second Bluetooth peripheral successfully performs the Bluetooth pairing, the Bluetooth module can receive information sent by the second Bluetooth peripheral, and the Bluetooth module can send the information of the second Bluetooth peripheral to the protocol stack module, so that the protocol stack module acquires the information of the second Bluetooth peripheral sent by the second Bluetooth peripheral through the Bluetooth module and stores it. Before the protocol stack module enters the dormant state, the protocol stack module sends the information of the second Bluetooth peripheral to the Bluetooth module. In this embodiment, the specific time for the protocol stack module to send the information of the second Bluetooth peripheral is not limited.

Optionally, in S601, before the protocol stack module obtains the information of the second Bluetooth peripheral sent by the second Bluetooth peripheral through the Bluetooth module, the method may further include:
the protocol stack module determines that whether the second Bluetooth peripheral supports the Bluetooth HID protocol.

In S601, the protocol stack module obtains the information of the second Bluetooth peripheral sent by the second Bluetooth peripheral through the Bluetooth module may include:
the protocol stack module obtains the information of the second Bluetooth peripheral sent by the second Bluetooth peripheral through the Bluetooth module, if determining that the second Bluetooth peripheral supports the Bluetooth HID protocol.

Specifically, it is determined that whether the second Bluetooth peripheral is a Bluetooth HID device by determining whether the second Bluetooth peripheral supports the Bluetooth HID protocol. When the second Bluetooth peripheral is a Bluetooth HID device, the acquired information of the second Bluetooth peripheral is more accurate and comprehensive. For example, the mapping information between the keys of the second Bluetooth peripheral and the key descriptors and the preset key further improve the accuracy of waking up the device through the Bluetooth peripheral.

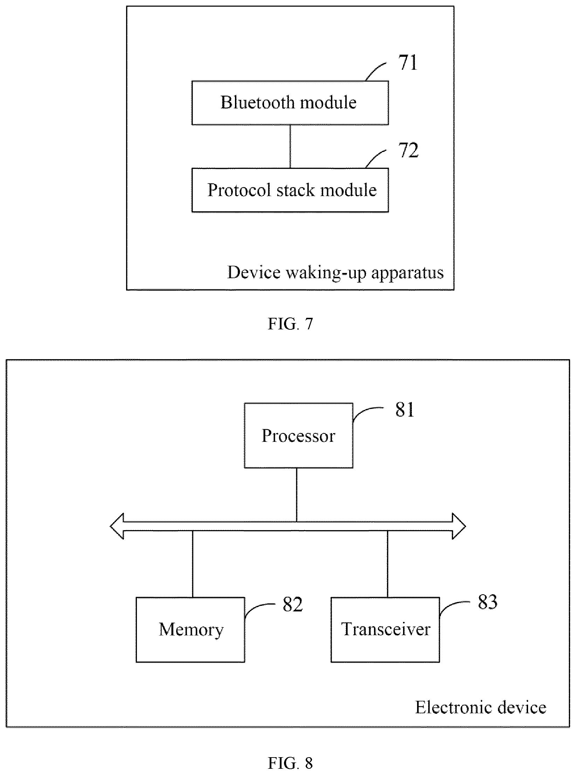

FIG. 7 is a schematic structural diagram of a device waking-up apparatus provided by an embodiment of the present invention. As shown in FIG. 7, the device waking-up apparatus provided in this embodiment may include a Bluetooth module 71 and a protocol stack module 72;
the Bluetooth module 71 is configured to receive data to be processed sent by a first Bluetooth peripheral when the protocol stack module 72 is in a dormant state; where, the Bluetooth module 71 stores information, sent by the protocol stack module 72 before entering the dormant state, of a second Bluetooth peripheral which successfully performs Bluetooth pairing with the Bluetooth module 71; and
the Bluetooth module 71 is further configured to wake up a device according to the data to be processed and the information of the second Bluetooth peripheral.

Optionally, the data to be processed includes an address of the first Bluetooth peripheral, and the information of the second Bluetooth peripheral includes an address of the second Bluetooth peripheral;
the Bluetooth module 71 is specifically configured to:
wake up the device if determining that the address of the first Bluetooth peripheral is the same as the address of the second Bluetooth peripheral.

Optionally, the data to be processed further includes a target key descriptor, and the information of the second Bluetooth peripheral further includes a preset key and mapping information between a key of the second Bluetooth peripheral and a key descriptor, and the preset key is used to wake up the device;
the Bluetooth module 71 is further configured to:
   determine whether the first Bluetooth peripheral supports a Bluetooth HID protocol before the waking up the device;
   determine a target key according to the target key descriptor and the mapping information, if determining that the first Bluetooth peripheral supports the Bluetooth HID protocol; and
the Bluetooth module 71 is specifically configured to:
   wake up the device if determining that the target key is the preset key.

Optionally, the first Bluetooth peripheral is a Bluetooth peripheral that keeps a Bluetooth connection with the Bluetooth module 71.

Optionally, a Bluetooth connection is not performed between the first Bluetooth peripheral and the Bluetooth module 71, and the data to be processed is broadcast by the first Bluetooth peripheral.

Optionally, the protocol stack module 72 is further configured to:
obtain the information of the second Bluetooth peripheral sent by the second Bluetooth peripheral through the Bluetooth module 71, before the protocol stack module 72 enters the dormant state, and after the Bluetooth module 71 successfully performs the Bluetooth pairing with the second Bluetooth peripheral; and
send the information of the second Bluetooth peripheral to the Bluetooth module 71.

Optionally, the protocol stack module 72 is further configured to:
determine whether the second Bluetooth peripheral supports a Bluetooth HID protocol before obtaining the information of the second Bluetooth peripheral sent by the second Bluetooth peripheral through the Bluetooth module 71;
the protocol stack module 72 is specifically configured to:
   obtain the information of the second Bluetooth peripheral sent by the second Bluetooth peripheral through the Bluetooth module 71, if determining that the second Bluetooth peripheral supports the Bluetooth HID protocol.

The device waking-up apparatus provided by this embodiment is used to execute the device waking-up method provided by the method embodiments of the present invention, and its technical principle and technical effect are similar with those of the method embodiments, which will not be repeated here.

FIG. 8 is a schematic structural diagram of an electronic device provided by an embodiment of the present invention. As shown in FIG. 8, the electronic device may include a processor 81, a memory 82, and a transceiver 83. The transceiver 83 is used to communicate with other devices. The memory 82 is configured to store instructions. The processor 81 is used to execute the instructions stored in the memory 82 to enable the electronic device to perform the device waking-up method provided by the method embodiments of the present invention, and its technical principle and technical effect are similar with those of the method embodiments, which will not be repeated here.

All or part of the steps to realize the above-mentioned method embodiments can be completed by hardware related to program instructions. The aforementioned program can be stored in a readable memory. When the program is executed, the steps of the above method embodiments are executed. The aforementioned memory (storage medium) includes: a read-only memory (English: read-only memory, abbreviation: ROM), a RAM, a flash memory, a hard disk, a solid-state disk, a magnetic tape (English: magnetic tape), a floppy disk (English: floppy disk), an optical disc (English: optical disc) and any combination thereof.

Embodiments of the present application are described with reference to flowcharts and/or block diagrams of methods, devices (systems), and computer program products according to embodiments of the present application. It should be understood that each flow and/or block in flowcharts and/or block diagrams, and combinations of flows and/or blocks in flowcharts and/or block diagrams can be realized by computer program instructions. These computer program instructions may be provided to the processing unit of a general-purpose computer, a special-purpose computer, an embedded processor or other programmable data processing device to produce a machine, so that the instructions executed by the processing unit of the computer or other programmable data processing device produce means for realizing the functions specified in one or more flows of the flowcharts and/or one or more blocks of the block diagrams.

These computer program instructions can also be stored in a computer-readable memory that can direct a computer or other programmable data processing device to work in a specific way, so that the instructions stored in the computer-readable memory produce an article of manufacture including instruction means that implement the functions specified in one or more flows of the flowcharts and/or one or more blocks of the block diagrams.

These computer program instructions can also be loaded on a computer or other programmable data processing device, so that a series of operation steps are executed on the computer or other programmable devices to produce a computer-implemented process, so that the instructions executed on the computer or other programmable devices provide steps for realizing the functions specified in one or more flows of the flowcharts and/or one or more blocks of the block diagrams.

Obviously, those skilled in the art can make various changes and variations to the embodiments of the present application without departing from the spirit and the scope of the present application. In this way, if these modifications and variations of the embodiments of the present application fall within the scope of the claims of the present application and their technical equivalents, the present application is also intended to include these changes and variations.

In the present application, the term "including" and variations thereof may refer to non-limiting inclusions; the term "or" and variations thereof can refer to "and/or". In the present application, the terms "first", "second" and the like are used to distinguish similar objects, and are not necessarily used to describe a specific order or sequence. In the present application, "multiple" refers to two or more. "And/or", which describes the relationship of related objects, means that there can be three kinds of relationships, for example, A and/or B, which can mean that there are three situations: A exists alone, A and B exist at the same time, and B exists alone. The character "/" generally indicates that the context object is with an "or" relationship.

## Claims

1. A device waking-up method, applied to a device waking-up apparatus, wherein the device waking-up apparatus comprises a Bluetooth module and a protocol stack module, and the method comprises:
receiving, by the Bluetooth module, data to be processed sent by a first Bluetooth peripheral, when the protocol stack module is in a dormant state; wherein the Bluetooth module stores information, sent by the protocol stack module before entering the dormant state, of a second Bluetooth peripheral which successfully performs Bluetooth pairing with the Bluetooth module; and
waking up, by the Bluetooth module, a device, according to the data to be processed and the information of the second Bluetooth peripheral.

2. The method according to claim 1, wherein the data to be processed comprises an address of the first Bluetooth peripheral, and the information of the second Bluetooth peripheral comprises an address of the second Bluetooth peripheral; and
the waking up, by the Bluetooth module, the device, according to the data to be processed and the information of the second Bluetooth peripheral comprises:
waking up, by the Bluetooth module, the device, if determining that the address of the first Bluetooth peripheral is the same as the address of the second Bluetooth peripheral.

3. The method according to claim 2, wherein the data to be processed further comprises a target key descriptor, and the information of the second Bluetooth peripheral further comprises a preset key and mapping information between a key of the second Bluetooth peripheral and a key descriptor, and the preset key is used to wake up the device;
before waking up, by the Bluetooth module, the device, further comprising:
determining, by the Bluetooth module, whether the first Bluetooth peripheral supports a Bluetooth human interface device (HID) protocol;
determining, by the Bluetooth module, a target key according to the target key descriptor and the mapping information, if determining that the first Bluetooth peripheral supports the Bluetooth HID protocol; and
the waking up, by the Bluetooth module, the device comprises:
waking up, by the Bluetooth module, the device, if determining that the target key is the preset key.

4. The method according to any one of claims 1 to 3, wherein the first Bluetooth peripheral is a Bluetooth peripheral that keeps a Bluetooth connection with the Bluetooth module.

5. The method according to claim 1 or 2, wherein a Bluetooth connection is not performed between the first Bluetooth peripheral and the Bluetooth module, and the data to be processed is broadcast by the first Bluetooth peripheral.

6. The method according to any one of claims 1 to 3, wherein before the protocol stack module enters the dormant state, the method further comprises:
obtaining, by the protocol stack module, the information of the second Bluetooth peripheral sent by the second Bluetooth peripheral through the Bluetooth module, after the Bluetooth module successfully performs the Bluetooth pairing with the second Bluetooth peripheral; and
sending, by the protocol stack module, the information of the second Bluetooth peripheral to the Bluetooth module.

7. The method according to claim 6, wherein before obtaining, by the protocol stack module, the information of the second Bluetooth peripheral sent by the second Bluetooth peripheral through the Bluetooth module, the method further comprises:
determining, by the protocol stack module, whether the second Bluetooth peripheral supports a Bluetooth HID protocol; and
the obtaining, by the protocol stack module, the information of the second Bluetooth peripheral sent by the second Bluetooth peripheral through the Bluetooth module comprises:
obtaining, by the protocol stack module, the information of the second Bluetooth peripheral sent by the second Bluetooth peripheral through the Bluetooth module, if determining that the second Bluetooth peripheral supports the Bluetooth HID protocol.

8. A device waking-up apparatus, comprising: a Bluetooth module and a protocol stack module;
wherein the Bluetooth module is configured to receive data to be processed sent by a first Bluetooth peripheral when the protocol stack module is in a dormant state; wherein the Bluetooth module stores information, sent by the protocol stack module before entering the dormant state, of a second Bluetooth peripheral which successfully performs Bluetooth pairing with the Bluetooth module; and
the Bluetooth module is further configured to wake up a device according to the data to be processed and the information of the second Bluetooth peripheral.

9. The apparatus according to claim 8, wherein the data to be processed comprises an address of the first Bluetooth peripheral, and the information of the second Bluetooth peripheral comprises an address of the second Bluetooth peripheral; and
the Bluetooth module is specifically configured to wake up the device if determining that the address of the first Bluetooth peripheral is the same as the address of the second Bluetooth peripheral.

10. The apparatus according to claim 9, wherein the data to be processed further comprises a target key descriptor, and the information of the second Bluetooth peripheral further comprises a preset key and mapping information between a key of the second Bluetooth peripheral and a key descriptor, and the preset key is used to wake up the device;
the Bluetooth module is further configured to:
determine whether the first Bluetooth peripheral supports a Bluetooth human interface device (HID) protocol before waking up the device;
determine a target key according to the target key descriptor and the mapping information, if determining that the first Bluetooth peripheral supports the Bluetooth HID protocol; and
the Bluetooth module is specifically configured to:
wake up the device, if determining that the target key is the preset key.

11. The apparatus according to any one of claims 8 to 10, wherein the first Bluetooth peripheral is a Bluetooth peripheral that keeps a Bluetooth connection with the Bluetooth module.

12. The apparatus according to claim 8 or 9, wherein a Bluetooth connection is not performed between the first Bluetooth peripheral and the Bluetooth module, and the data to be processed is broadcast by the first Bluetooth peripheral.

13. The apparatus according to any one of claims 8 to 10, wherein the protocol stack module is further configured to:
obtain the information of the second Bluetooth peripheral sent by the second Bluetooth peripheral through the Bluetooth module, before the protocol stack module enters a dormant state, and after the Bluetooth module successfully performs the Bluetooth pairing with the second Bluetooth peripheral; and
send the information of the second Bluetooth peripheral to the Bluetooth module.

14. The apparatus according to claim 13, wherein the protocol stack module is further configured to:
determine whether the second Bluetooth peripheral supports a Bluetooth HID protocol before obtaining the information of the second Bluetooth peripheral sent by the second Bluetooth peripheral through the Bluetooth module;
the protocol stack module is specifically configured to:
obtain the information of the second Bluetooth peripheral sent by the second Bluetooth peripheral through the Bluetooth module, if determining that the second Bluetooth peripheral supports the Bluetooth HID protocol.

15. An electronic device, comprising: a processor, a memory and a transceiver;
wherein the transceiver is configured to communicate with other devices;
the memory is configured to store instructions; and
the processor is configured to execute the instructions stored in the memory to perform the method according to any one of claims 1 to 7.

16. A computer-readable storage medium, comprising: a readable storage medium and a computer program, and the computer program is used to implement the method according to any one of claims 1 to 7.

17. A program product, comprising a computer program stored in a readable storage medium;
wherein at least one processor of an electronic device reads the computer program from the readable storage medium, and the at least one processor executes the computer program to perform the method according to any one of claims 1 to 7.
